Europäisches Patentamt

European Patent Office

Office européen des brevets

(19)

(11) Veröffentlichungsnummer : **0 134 836**
**B1**

(12) **EUROPÄISCHE PATENTSCHRIFT**

(45) Veröffentlichungstag der Patentschrift :
**19.08.87**

(21) Anmeldenummer : **83109375.2**

(22) Anmeldetag : **21.09.83**

(51) Int. Cl.⁴ : **A 01 J 7/00**, G 01 F 3/38,
G 01 F 15/08

(54) **Milchmengenmess- und/oder Milchflussüberwachungsvorrichtung und Verfahren zum Messen der von einer Kuh während eines Melkvorganges abgegebenen Milchmenge bzw. zum Überwachen des Milchflusses während des Melkvorganges unter Verwendung der Vorrichtung.**

(43) Veröffentlichungstag der Anmeldung :
**27.03.85 Patentblatt 85/13**

(45) Bekanntmachung des Hinweises auf die Patenterteilung : **19.08.87 Patentblatt 87/34**

(84) Benannte Vertragsstaaten :
**AT BE CH DE FR GB IT LI NL SE**

(56) Entgegenhaltungen :
**EP-A- 0 081 049**
**DE-A- 2 839 101**
**GB-A- 1 316 573**
**GB-A- 2 015 861**
**US-A- 3 115 038**
**US-A- 3 919 975**

(73) Patentinhaber : **F. Landwehr Maschinenfabrikation
GmbH
Isselhorster Strasse 379
D-4830 Gütersloh 12 (DE)**

(72) Erfinder : **Landwehr, Friedrich, Ing. grad.
Isselhorster Strasse 379
D-4830 Gütersloh 12 (DE)**
Erfinder : **Jahoda, Dieter
Voltagasse 65
A-1212 Wien (AT)**

(74) Vertreter : **Hanewinkel, Lorenz, Dipl.-Phys.
Patentanwalt Ferrariweg 17a
D-4790 Paderborn (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Milchmengenmeß- und/oder Milchflußüberwachungsvorrichtung nach der Gattung im Oberbegriff des Patentanspruches 1 und auf ein Verfahren zum Messen der Milchmenge bzw. zum Überwachen des Milchflusses während des Melkvorganges unter Verwendung der Vorrichtung.

Derartige aus GB-A-2015861 bekannte und im Oberbegriff des Patentanspruches 1 beschriebene Vorrichtungen zeigen den Nachteil einer unzureichenden Wirkungsweise und nicht exakten Meßdurchführung, da einerseits der magnetische Schwimmer beim Milcheinfluß in die Meßkanne auch von oben beaufschlagt werden kann und somit in seiner genauen Funktion beeinträchtigt wird, und andererseits zwei Öffnungs- und Verschlußorgane für den Milchein- und -auslauf in die bzw. aus der Meßkammer erforderlich sind, die die Steuerung und Arbeitsweise komplizieren.

Aufgabe der Erfindung ist es, eine verbesserte Milchmengenmeßvorrichtung zu schaffen, die eine einfache und sichere Funktion hat und ein optimales Messen der abgemolkenen Milchmenge gewährleistet und gleichzeitig als Milchflußüberwachungsvorrichtung verwendet werden kann. Dabei soll der magnetische Schwimmer gegen beeinträchtigende Einflüsse der Milch geschützt angeordnet und für das Absperren des Milcheinlaufens in die Meßkammer ein einfacher und sicher wirkender Verschluß vorgesehen sein.

Eine weitere Aufgabe der Erfindung ist die Schaffung eines Verfahrens zum Milchmengenmessen und Milchflußüberwachen unter Verwendung der Vorrichtung, welches in einem in sich geschlossenen System ein störungsfreies rationelles und äußerst genaues Messen der Milchmenge und Überwachen des Milchflusses vornimmt.

Die erste Aufgabenstellung wird durch die kennzeichnenden Merkmale des Patentanspruches 1 gelöst, wobei noch die in den Unteransprüchen 2 bis 12 angegebenen Gestaltungsmerkmale vorteilhafte Weiterbildungen der Aufgabenlösung darstellen.

Die zweite Aufgabenstellung wird durch die Verfahrensansprüche 13 bis 16 gelöst.

Der Gegenstand der Erfindung erstreckt sich nicht nur auf die Merkmale der einzelnen Ansprüche, sondern auch auf deren Kombination.

Die erfindungsgemäße Vorrichtung arbeitet mit einem geschlossenen Vakuum-Belüftungssystem, durch das ein exaktes Messen der Milchmenge und ein sicheres Überwachen des Milchflusses gewährleistet wird. Im Vakuumzustand kann die zu messende Milch ohne Beeinträchtigung des Schwimmers in die Meßkammer fließen und dann dort den Schwimmer für die Mengenschaltung beaufschlagen.

Nach Erreichen der eingestellten Milchmenge in der Meßkammer wird durch Belüftung ein schnelles Herausdrücken der gemessenen Milchmenge bewirkt, so daß der Meßvorgang äußerst rationell bei hoher Genauigkeit durchführbar ist.

Weiterhin ist die Vorrichtung als 1/10-Liter-Meßgerät ausgelegt, wobei der magnetische Schwimmer mit einem Reedkontakt zusammenwirkt, der jeweils nach dem Einfließen von 1/10 l Milch schaltet und die Belüftungsphase einleitet. Dadurch wird die weitere Aufgabe einer einfachen, sicheren und auf eine keine (bestimmte) Milchmenge abgestellten Messung gelöst.

Die Vorrichtung ist aus wenigen einfachen, sicher und störungsfrei wirkenden Bauteilen gebildet und hat günstige Schließ- und Belüftungsorgane sowie ist leicht zu reinigen.

Anhand der Zeichnungen werden nachfolgend Ausführungsbeispiele der Erfindung näher erläutert. Dabei zeigt :

Figur 1 eine schematische Darstellung einer Milchmengenmeß- und/oder Milchflußüberwachungsvorrichtung im Anfang der Milchmengenmeßstellung,

Figur 2 eine schematische Darstellung einer mit einem Schaltkontakt arbeitenden Milchmengenmeß- und/oder Milchflußüberwachungsvorrichtung als 1/10 l-Gerät.

Figur 3 eine schematische Darstellung einer Milchmengenmeß- und/oder Milchflußüberwachungsvorrichtung in weiterer Ausführung.

Die erfindungsgemäße Vorrichtung für Melkanlagen zum Messen der von einer Kuh im Zuge des Melkens abgegebenen Milchmenge weist eine unterdruckbeaufschlagbare Luftabscheidekammer 1 auf, in der die Milch aus dem abgemolkenen Milchluftgemisch ausgeschieden wird. Diese Luftabscheidekammer 1 steht mit einer Milchzuführleitung 2 in Verbindung, welche vom Melkzeug aus das abgemolkene Milchluftgemisch erhält und in die Luftabscheidekammer 1 führt.

An diese Luftabscheidekammer 1 ist eine Meßkammer 3 angesetzt, die über eine verschließbare Milcheinlauföffnung 4 mit der Luftabscheidekammer 1 verbunden ist und die einen Milchauslauf 5 aufweist.

Die Milcheinlauföffnung 4 erstreckt sich im Bodenbereich 1a der Luftabscheidekammer 1 und im oberen Stirnbereich der unter der Luftabscheidekammer 1 angeordneten Meßkammer 3 und vorzugsweise auf der zentralen Längsachse beider koaxial zueinander angeordneten Kammern 1,3. Der Milchauslauf 5 geht im Bodenbereich oder im bodenseitigen Mantelbereich der Meßkammer 3 ab und ist als Abpumpleitung 6 zu einer Milchtransportleitung 7 hin geführt. Beide Kammern 1,3 sind vorzugsweise zylindrisch ausgebildet und haben kreisförmige Grundform, wobei der Durchmesser beider Kammern 1,3 gleich oder unterschiedlich groß sein kann und deren Höhe vorzugsweise unterschiedlich groß ist, wobei die Meßkammer 3 eine größere Höhe als die Luftscheidekammer 1 aufweist oder umgekehrt.

In der Meßkammer 3 ist eine Meßeinrichtung 8 angeordnet, welche einen magnetischen, in Abhängigkeit von der Höhe des Milchspiegels höhenbeweglichen, mindestens einen Schaltkontakt 9 betätigenden Schwimmer 10 besitzt. Die Kontakte 9 stehen über eine elektrische Leitung 11 mit einer Zähl- und/oder Anzeigeeinrichtung 12 in Verbindung, die von den vom Schwimmer 10 betätigten Schaltkontakten 9 Impulse erhält und somit die gemessene Milchmenge registriert bzw. anzeigt.

Der magnetische Schwimmer 10 ist auf einem in der Meßkammer 3 auf deren zentralen Längsachse (Höhenachse) stehenden Belüftungsrohr 13 auf- und abbewegbar geführt, wobei sich dieses Belüftungsrohr 13 nahezu über die gesamte Meßkammerhöhe erstreckt und mit seinem oberen offenen Stirnende 13a mit Abstand vor der (unterhalb der) Milcheinlauföffnung 4 endet.

Dieses Belüftungsrohr 13 ist mit einem Belüftungsventil 14, vorzugsweise Magnetventil mit Zeitrelais, ausgestattet, welches in bevorzugter Weise an dem aus der Meßkammer 3 bodenseitig herausragenden Belüftungsrohrende angesetzt ist. Weiterhin nimmt dieses Belüftungsrohr 13 in der Meßkammer 3 am Luftaustrittsende 13a ein Trennventil 15 auf, daß bei Unterdruck (Vakuum) in beiden Kammern 1,3 die Milcheinlaüföffnung 4 freigibt und beim Belüften der Meßkammer 3 die Milcheinlauföffnung 4 verschließt. Dieses Trennventil 15 ist in bevorzugter Weise von einem Scheibenventil gebildet, welches mit einem Führungsrohr 16 in dem Belüftungsrohr 13 höhenbeweglich geführt ist. Dieses Führungsrohr 16 erstreckt sich ober- und unterhalb des scheibenförmigen Trennventiles 15 und hat somit einen unteren in dem Belüftungsrohr 13 höhenverschiebbar (lose) gelagerten Führungsbereich und sein oberer Rohrbereich ragt in die Luftabscheidekammer 1 hinein, so daß beim Belüften der Meßkammer 3 durch dieses Führungsrohr 16 Luft auf die Milchoberfläche der Luftabscheidekammer 1 einströmen kann und als Schaumdämpfung dient.

Es liegt im Rahmen der Erfindung, anstelle des scheibenförmigen Trennventiles 15 auch ein Klappen- oder Kugelventil vorzusehen, welches die gleiche Wirkungsweise erfüllt.

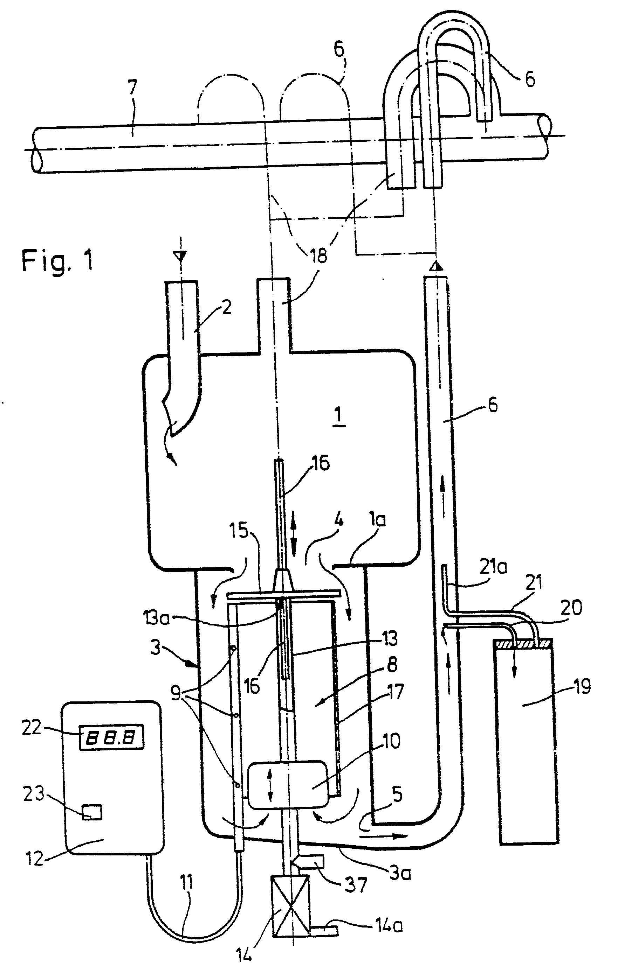

Um den mit Permanentmagnet ausgestatteten Schwimmer 10 und das Belüftungsrohr 13 ist gemäß Fig. 1 in der Meßkammer 3 ein Zylinder 17 angeordnet, der einen Teilbereich der Meßkammerhöhe einnimmt und mit seinem unteren Ende mit Abstand oberhalb des Meßkammerbodens steht sowie mit seinem oberen Ende mit Abstand unterhalb der Milcheinlauföffnung endet.

Der Zylinder 17 wird bei geöffneter Milcheinlauföffnung 4 durch das Trennventil 15 abgedeckt, indem sich das Trennventil 15 auf den oberen, geringfügig aus dem Zylinder 17 hervorstehenden Stirnende des Belüftungsrohres 13 abstützt, so daß die aus der Luftabscheidekammer 1 in die Meßkammer 3 fließende Milch nicht in den Zylinder 17 und somit auf den Schwimmer 10 fließen kann. Das Trennventil 15 hält den Zylinderhohlraum, in dem der Schwimmer 10 aufsteigt, am oberen Ende abgedeckt und dadurch wird der Schwimmer 10 von oben her durch eindringende Milch in seiner aufsteigenden Wirkungsweise nicht beeinträchtigt. Die Milch fließt zwischen Zylinder 17 und Meßkammerwandung nach unten und dann von unten her in den Zylinder 17 ein und beaufschlagt von unten her den Schwimmer 10 (der Milchfluß ist in der Zeichnung durch die Pfeile gekennzeichnet). Gleichzeitig fließt die Milch in die nach oben aufsteigende und mit der Meßkammer 3 kommunizierend ausgeführte Abpumpleitung 6.

Der oder die Schaltkontakte 9 sind vorzugsweise an der Mantelwandung des Zylinders 17 angeordnet, wobei mindestens ein Kontakt 9 vorgesehen sein muß, vorzugsweise aber mehrere Kontakte 9 im Abstand übereinander angeordnet sind. Die Abpumpleitung 6 ist mindestens bis zum obersten Schaltkontakt 9 kommunizierend mit der Meßkammer 3 ausgebildet.

Das Belüftungsventil 14 besitzt selbst einen Lufteinlaß oder aber ist mit einem Luftanschlußstutzen 14a versehen. Am dem Belüftungsrohr 13 ist in Belüftungsrichtung hinter dem Belüftungsventil 14 eine Spülleitung 37 angeschlossen, die zusammen mit dem Belüftungsrohr 13 ein Spülrohr zum Ausspülen der Vorrichtung mit Wasser o. dgl. zu Reinigungszwecken bildet.

In die Luftabscheidekammer 1 ist eine Vakuumversorgungsleitung 18 hineingeführt zur Bildung des Unterdruckes in beiden Kammern 1,3. Diese Vakuumversorgungsleitung kann dabei von einer eigenen Vakuumerzeugervorrichtung gespeist werden oder aber ist an die ebenfalls mit Unterdruck beaufschlagte und als Saugleitung wirkende Milchtransportleitung 7 angeschlossen. Dabei ist es bevorzugt, die Vakuumversorgungsleitung 18 und die Abpumpleitung 6 in einem gemeinsamen (einzigen) Anschluß an die Milchtransportleitung 7 anzusetzen, wobei — wie in der Zeichnung nach Fig. 1 dargestellt — die Abpumpleitung 6 in die Vakuumversorgungsleitung 18 einmündet und beide Leitungen 6,18 im Rohrmantel der Milchtransportleitung 7 enden.

An die Abpumpleitung 6 ist ein abnehmbarer Probenentnahmebehälter 19 angeschlossen, der eine Zulaufleitung 20 und eine Saugleitung 21 aufweist. Die Zulaufleitung 20 dient zum Entnehmen von Milchproben aus der Abpumpleitung 6 und ragt winklig, vorzugsweise rechtwinklig, in die Abpumpleitung 6 hinein und endet auf der Rohrachse der Abpumpleitung 6. Die Saugleitung 21 dient zum Evakuieren des Probenentnahmebehälters 19 und ragt winklig, vorzugsweise rechtwinklig, in die Abpumpleitung 6 hinein und ist dann in der Rohrachse der Saugleitung 6 in Milchflußrichtung als Kernleitungsstück 21a weitergeführt. Die Saugleitung 21 erstreckt sich in Milchflußrichtung mit Abstand oberhalb der Zulaufleitung.

Die Kammern 1,3, der Zylinder 17 und der Probenentnahmebehälter 19 sind vorzugsweise aus einem durchsichtigen Werkstoff, wie Glas, Kunststoff o. dgl., hergestellt.

Mit 22 ist eine Sichtanzeige der Zähl- und Anzeigeeinrichtung 12 bezeichnet und 23 stellt einen Taster zur Handbetätigung des Belüftungsventils 14 dar. Dieser Taster 23 dient auch zur Nullstellung der Anzeige 22.

Die erfindungsgemäße Vorrichtung stellt ein geschlossenes Vakuumsystem dar und arbeitet zum Milchmengenmessen wie folgt :

Die Luftabscheidekammer 1 wird über die Leitung 18 mit Vakuum versorgt und dieses Vakuum wird auch in der Meßkammer 3, im Zylinder 17, in der Abpumpleitung 6 und in dem Probenentnahmebehälter 19 durch deren ununterbrochene Verbindung erreicht. Hierbei befindet sich das Trennventil 15 in der abgesenkten Öffnungsstellung, in die es durch die lose Führung im Belüftungsrohr 13 und durch sein Eigengewicht gelangt ist. Nun wird durch die Milchzuführleitung 2 das abgemolkene Milchluftgemisch der Luftabscheidekammer 1 zugeführt und darin die Luft aus der Milch ausgeschieden. Die Milch strömt dann durch die Öffnung 4 über das Trennventil 15 in den Ringraum zwischen Zylinder 17 und Meßkammerwandung in die Meßkammer 3 und dort von unten her in den Zylinder 17 ein, wo sie den Schwimmer 10 beaufschlagt. Dieser Schwimmer 10 steigt entsprechend des Meßspiegels der Milch an und betätigt den oder die Kontakte 9, wobei deren Schaltanzahl ein Maß für die ermolkene Milch ist, und der oder die Kontakte 9 geben die Schaltimpulse an die Zähl- und/oder Anzeigeeinrichtung 12 weiter, wo die ermolkene Milchmenge gezählt und registriert sowie angezeigt wird.

Bei Erreichen einer gewissen Milchmenge in der Meßkammer 3, die vorbestimmt oder einstellbar durch den oder die Kontakte 9 ist, wird das Belüftungsventil 14 betätigt (geöffnet) und dadurch strömt Luft durch das Belüftungsrohr 13 ein, durch die das Trennventil 15 von dem Belüftungsrohr 13 und Zylinder 17 nach oben angehoben und in die Schließstellung hochgeschoben wird, so daß die Milcheinlauföffnung 4 geschlossen und gleichzeitig Luft zum Milchtransport eingelassen wird.

Dadurch wird — unterstützt durch das Vakuum (den Sog) in der mit der Milchtransportleitung 7 verbundenen Abpumpleitung 6 — die gemessene Milchmenge aus der Meßkammer 3 herausgedrückt und durch die Abpumpleitung 6 in die Milchtransportleitung 7 gesaugt. Dieses Herausdrücken bzw. Heraussaugen der gemessenen Milch erfolgt sofort nach der Belüftung plötzlich (mit großer Geschwindigkeit) und nach dem Herausdrücken der gemessenen Milchmenge aus der Meßkammer 3 fällt das Trennventil 15 nach Schließung des Belüftungsventils 14 wieder in die geöffnete Stellung ab und in beiden Kammern 1,3 herrscht wieder gleiches Vakuum, unterstützt durch das Führungsrohr 16, da in der Luftabscheidekammer 1 ständig konstantes Vakuum herrscht.

Das Milchmengenmessen in der Meßkammer 3 und das anschließende Herausdrücken der gemessenen Milchmenge aus der Kammer 3 erfolgt im schnellen Wechsel nacheinander, und zwar so lange, bis ein Melkvorgang beendet ist.

Während jedes Meßvorganges, bei dem die Milch in die Meßkammer 3 und somit in den kommunizierenden Bereich der Abpumpleitung 6 ansteigt, und dabei bis in den Höhenbereich der Zulaufleitung 20 des Probenentnehmers 19 ansteigt, oder aber beim Entlüften, wenn die Milch durch die Abpumpleitung 6 herausgedrückt wird, fließt durch den Druckausgleich automatisch eine geringe Menge an Milch durch die Zulaufleitung 20 in den Probenentnahmebehälter 19 hinein, so daß von jedem Meßvorgang eine Milchmenge zur Probe entnommen wird, was eine kontinuierliche Probenentnahme während des gesamten Melkvorganges gewährleistet. Die Saugleitung 21 des Probenentnahmebehälters 19 bewirkt beim Belüften eine Aufhebung des Vakuums im Probenentnahmebehälter 19, wobei jedoch die zur Probe entnommene Milchmenge in Behälter 19 verbleibt.

Der ober die Schaltkontakte 9 bestimmen für jeden Meßvorgang die gewünschte Milchmenge, und danach erfolgt das Belüften und Herausdrücken der gemessenen Milchmenge. Sollte bei einem Meßvorgang, z. B. dem Abmelkmeßvorgang, die eingestgllte Milchmenge nicht mehr erreicht werden, dann kann die Belüftung von Hand durch Betätigung des Tasters 23 an der Zähl- und/oder Anzeigeeinrichtung 12 eingeleitet werden.

Der Belüftungsvorgang ist durch das mit dem Belüftungsventil 14 gekoppelte Zeitrelais zeitmäßig oder einen Minimum-Maximumschalter eingestellt bzw. einstellbar.

Die erfindungsgemäße Vorrichtung ist gleichzeitig als Milchflußüberwachungsgerät verwendbar, indem es die gleiche Wirkungsweise wie bei der Milchmengenmessung durchführt. Hierbei dient die Frequenz der Schaltimpulse als Maß für den Milchfluß. Bei Verringerung der Frequenz der Schaltimpulse, entsprechend einem Milchfluß unter 0,25 kg/Min., wird die Pulsation der Melkanlage abgeschaltet oder die Pulsfrequenz verringert.

Das Führungsrohr 16 erfüllt zwei Funktionen, und zwar :

1. in der Belüftungsphase strömt durch das Führungsrohr 16 Luft in die Abscheidekammer (Trennkammer) 1, wobei ein Luftteilstrom auf die Milchoberfläche umgelenkt wird, wodurch der Effekt einer Schaumzerstörung (Schaumbremse) erzielt wird und

2. wenn das Magnetventil 10 schließt, sorgt das Führungsrohr 16 für einen raschen Druckausgleich und beschleunigt dabei das Öffnen des Trennventils 15.

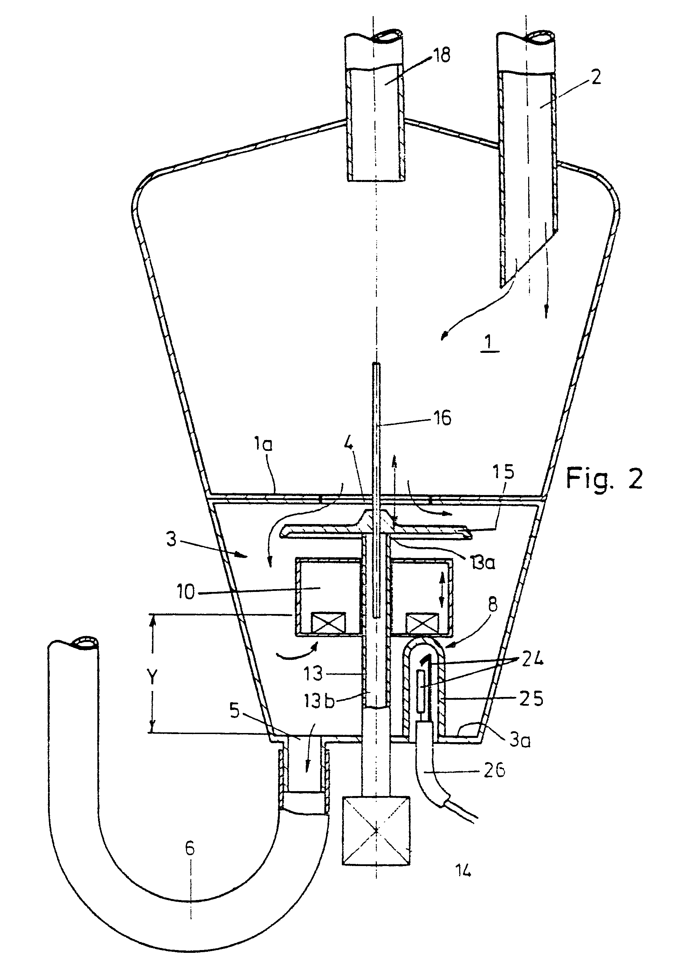

Die Milchmengenmeß- und/oder Milchflußüberwachungsvorrichtung gemäß der weiteren Ausführung nach Fig. 2 ist als ein 1/10 l-Gerät (ein zehntel-Liter-Gerät) ausgeführt, so daß dieses Gerät jeweils nach der Aufnahme von einem zehntel Liter Milch schaltet.

Dieses Gerät arbeitet im Grundprinzip nach dem Gerät nach Fig. 1 und ist ähnlich aufgebaut, so daß für gleiche Bauteile dieselben Bezugszahlen verwendet werden.

In der unterhalb der Luftabscheidekammer 1 angeordneten und durch die Milcheinlauföffnung 4 mit derselben verbundenen Meßkammer 3 ist ein elektrischer Schaltkontakt 24, vorzugsweise ein Reedkontakt, angeordnet, der sich vorzugsweise auf dem Boden der Meßkammer 3 abhebt und von einer elastischen Schutzkappe 25 umgeben ist. Diese Meßkammer 3 ist ohne Zylinder 17 ausgestattet und das vorzugsweise als Scheibenventil ausgebildete Trennventil 15 überdeckt vollfächig die obere Stirnfläche des auf dem Belüftungsrohr 13 höhenverschiebbaren magnetischen Schwimmer 10, so daß auch dadurch die einfließende Milch den Schwimmer 10 von oben her nicht nachteilig beaufschlagen kann. Auch dieses Trennventil 15 stützt sich in der geöffneten Stellung auf dem oberen Stirnende des mit Abstand unterhalb der Milcheinlauföffnung 4 endenden Belüftungsrohres 13 ab.

Das Höhenmaß « Y » zwischen Schwimmer 10 und Meßkammerboden gibt die 1/10 I-Menge an.

In der unter Vakuum gehaltenen Öffnungsstellung des Gerätes befindet sich das Trennventil 15 in der abgesenkten Öffnungsstellung und die Milch kann aus der Luftabscheidekammer 1 in die Meßkammer 3 einströmen und von unten her den Magnetschwimmer 10 beaufschlagen. Der unterhalb des Schwimmers 10 angeordnete Reedkontakt 24 ist vom aufliegenden Schwimmer 10 betätigt (geschlossen) und auch das Belüftungsrohr 13 durch das Belüftungsventil 14 geschlossen. Ist nun in die Meßkammer 3 eine Milchmenge von 1/10 I hineingeflossen, dann wurde der Schwimmer 10 von unten beaufschlagt und vom Reedkontakt 24 abgehoben, so daß der Reedkontakt 24 wiederum betätigt (geöffnet) wird und diese Reedkontakt 24 gibt dann einen Impuls zum Belüftungsventil 14, welches öffnet und Luft in das Belüftungsrohr 13 einströmen läßt, wodurch das Trennventil 15 in die obere Schließstellung angehoben wird und die gemessene Milchmenge über den Auslauf 5 in die Abpumpleitung ausströmt und zur Milchtransportleitung 7 fließt.

Danach senkt sich der Schwimmer 10 und betätigt den Reedkontakt 24, das Belüftungsventil 14 schließt und der Vakuumausgleich zwischen den Kammern 1,3 wird — unterstützt durch das Führungsrohr 16, welches mit beiden Kammern 1,3 eine Durchflußverbindung hat — wieder hergestellt. Das Trennventil 15 fällt ab und es kann wieder Milch zum Messen in die Meßkammer 3 einfließen. Die Meßkammer 3 kann bei dieser Ausführung besonders klein gehalten sein.

An die Abpumpleitung 6 kann ebenso wie bei der Ausführung nach Fig. 1 ein Probenentnehmer 19 abgeschlossen sein.

Der Reedkontakt 24 ist über elektrische Leitungen 26 mit dem Belüftungsventil 14 und der Anzeige 12 verbunden.

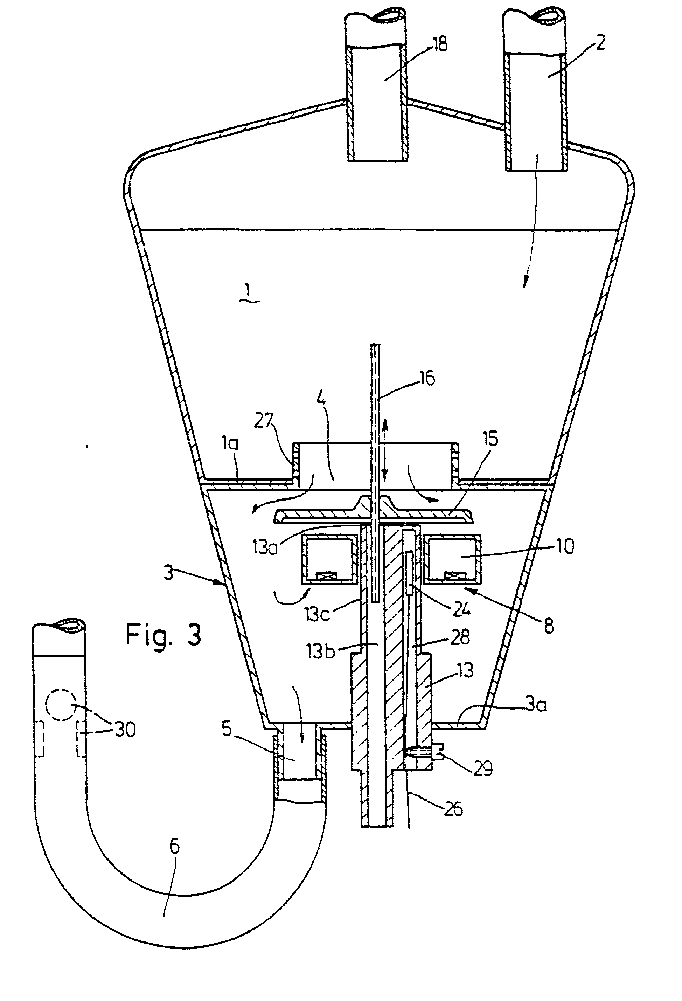

Die Milchmengenmeß- und/oder Milchflußüberwachungsvorrichtung gemäß der weiteren Ausführung nach Fig. 3 entspricht im Grundaufbau und in der Wirkung den Ausführung nach Fig. 1 und 2 und es sind für gleiche Teile auch die gleichen Bezugszahlen verwendet worden. Nachfolgend werden deshalb lediglich die unterschiedlichen Merkmale beschrieben.

An dem Bodenbereich 1a der Luftabscheidekammer 1 ist ein um die Milcheinlauföffnung 4 umlaufender, nach oben in die Luftabscheidekammer 1 hineinragender Rand 27 vorgesehen, der in bevorzugter Weise perforiert ist, z. B. mit Durchtrittsöffnungen ausgestattet oder als Lochkorb ausgeführt ist. Der Vorteil dieses Randes 27 wird einerseits in einer gleichmäßigen Verteilung der Milch um die Milcheinlauföffnung 4 herum und somit ein gleichmäßiges Einfließen der Milch in die Meßkammer 3 und andererseits in einer zusätzlichen Führung für das höhenbewegliche Trennventil 15 gesehen. Dieser Rand 27 ist in bevorzugter Weise zylindrisch ausgeführt und erstreckt sich mit einer gewissen Höhe in die Luftabscheidekammer 1 hinein, so daß die Milch gleichmäßig um diesen Rand 27 herum verteilt wird und dann durch den gelochten Rand 27 hindurch in die Einlauföffnung 4 gelangen kann.

Das Belüftungsrohr 13 ist hierbei als Einsatzkörper ausgebildet, in dem einerseits die axiale Luftzuführbohrung 13b, in der das Trennventil 15 mit seinem Führungsrohr 16 höhenverschiebbar geführt ist, und zum anderen eine parallel dazu verlaufende Aufnahmebohrung 28 in Form einer von unten her in den Einsatzkörper 13 hineingeführten und obenendig geschlossenen Sacklochbohrung ausgenommen ist ; in dieser Aufnahmebohrung 28 ist ein Schaltkontakt 24 höhenmäßig einstellbar angeordnet, dessen elektrische Leitung 26 nach unten aus der Aufnahmebohrung 28 herausgeführt ist. Die Einstellung des Schaltkontaktes 24 kann durch eine im Einsatzkörper 13 außerhalb der Meßkammer 3 angeordnete und mit der elektrischen Leitung 26 zusammenwirkenden Klemmschraube 29 erfolgen.

Der Vorteil dieser Kontaktanordnung in der Aufnahmebohrung 28 wird in einer einfachen Einstellmöglichkeit des Schaltpunktes und in der Möglichkeit des Überfahrens des Schwimmers 10 bei mittigem Kontakt 24, wodurch ein Höchstmaß an Schaltgenauigkeit gegeben ist, gesehen.

Der das Belüftungsrohr 13 bildende Einsatzkörper ist im Boden 3a der Meßkammer 3 festgelegt und ragt nach unten aus der Meßkammer 3 heraus. Der obere Endbereich des Einzatskörpers 13 ist als Führungsansatz 13c für den Schwimmer 10 ausgebildet, so daß der Schwimmer 10 auf einem begrenzten Höhenbereich höhenverfahrbar ist.

In der Abpumpleitung 6 ist in deren kommunizierenden Bereich ein gewichtsabhängiges Rückschlagventil 30 angeordnet, welches den Milchpegel in der Meßkammer 3 stabilisiert. Dieses Rückschlagventil 30 liegt mit seinem Ventilsitz auf dem Höhenniveau des Meßkammerbodens 3a.

Bei den beiden Ausführungen nach Fig. 2 und 3 bilden der Kontakt 24 und der Schwimmer 10 die mit der Zähl- und/oder Anzeigeeinrichtung 12 verbundene Meßeinrichtung.

Die beiden Kammern 1,3 gemäß Fig. 2 und 3 sind beispielsweise in Höhenrichtung konisch ausgebildet.

**Patentansprüche**

1. Michlmengenmeß- und/oder Michflußüberwachungsvorrichtung für Melkanlagen zum Messen der von einer Kuh während eines Melkvorganges abgegebenen Michlmenge bzw. zum Überwachen des Milchflusses während des Melkvorganges, mit einer Milchzuführleitung (2) verbundenen, unterdruckbeaufschlagbaren Luftabscheidekammer (1) und einer über eine verschließbare Milcheinlauföffnung (4) mit der Luftabscheidekammer (1) verbundene und einen Milchauslauf (5) aufweisende Meßkammer (3), in der eine Meßeinrichtung mit einem auf einem Rohr (13) geführten, magnetischen Schwimmer (10) und mindestens ein vom Schwimmer (10) in Abhängigkeit von der Höhe des Milchspiegels betätigbaren Schaltkontakt (9) angeordnet ist, sowie einer von dem oder den Schaltkontakten impulserhaltenden Zähl- und/oder Anzeigeeinrichtung (12), dadurch gekennzeichnet, daß das Rohr (13) als Belüftungsrohr ausgebildet ist und daß der magnetische Schwimmer (10) auf einem mit Abstand vor der Milcheinlauföffnung (4) endenden, ein Belüftungsventil (14) aufweisenden Belüftungsrohr (13) geführt ist, welches in der Meßkammer (3) am Luftaustrittsende (13a) ein die Milcheinlauföffnung (4) bei Unterdruck in beiden Kammern (1, 3) freigebendes und bei Belüftung verschließendes Trennventil (15) beweglich trägt.

2. Vorrichtung nach Anspruch 1, dadurch gekennzeichnet, daß das Belüftungsrohr (13) auf der zentralen Höhenachse der Meßkammer (3) angeordnet ist und an seinem untenseitige herausragenden Rohrende das von einem Magnetventil gebildete Belüftungsventil (14) aufweist.

3. Vorrichtung nach Anspruch 1, dadurch gekennzeichnet, daß das Trennventil (15) zwischen oberen Laufaustrittsende (13a) des Belüftungsrohres (13) und Milcheinlauföffnung (4) höhenverschiebbar angeordnet und vorzugsweise von einem Scheibenventil oder Klappen- oder Kugelventil gebildet ist, welches mit einem Führungsrohr (16) lose geführt in das Belüftungsrohr (13) eingreift, wobei dieses Führungsrohr (16) durch die Milcheinlauföffnung (4) hindurch bis in die Luftabscheidekammer (1) geführt ist.

4. Vorrichtung nach den Ansprüchen 1 bis 3, dadurch gekennzeichnet, daß um das Belüftungsrohr (13) und um den mit Permanentmagnet sowie einem Zeitrelais und/oder Minimum-Maximumschalter ausgestatteten Schwimmer (10) ein mindestens einen vorzugsweise mehrere, im Abstand übereinander angeordnete und über eine elektrische Leitung (11) mit der Zähl- und/oder Meßeinrichtung (12) verbundene Schaltkontakte (9) tragender Zylinder (17) angeordnet ist, der mit seinem oberen Stirnende mit Abstand unterhalb der Milcheinlauföffnung (4) und mit seinem unteren Stirnende mit Abstand oberhalb des Meßkammerbodens endet sowie mit dem Meßkammermantel einen Ringraum für die zu messende Milch bildet, wobei das Trennventil (15) in der geöffneten Stellung die obere Stirnöffnung des Zylinders (17) unter Vermeidung eines Milcheinlaufes in den Zylinder (17) und somit ein Beaufschlagen des Schwimmers (10) von oben her verschließt (Fig. 1).

5. Vorrichtung nach den Ansprüchen 1 bis 4, dadurch gekennzeichnet, daß an dem bodenseitigen Milchauslauf (5) der Meßkammer (3) eine Abpumpleitung (6) angeschlossen ist, die mindestens bis zum obersten Schaltkontakt (9) zu der Meßkammer (3) kommunizierend ausgebildet und zu einer Milchtransportleitung (7) geführt ist und daß die Abpumpleitung (6) und eine Vakuumversorgungsleitung (18) der Luftabscheidekammer (1) einen gemeinsamen Anschluß an der Milchtransportleitung (7) haben (Fig. 1).

6. Vorrichtung nach Anspruch 5, dadurch gekennzeichnet, daß an der Abpumpleitung (6) ein abnehmbarer Probenentnahmebehälter (19) mit einer Zulaufleitung (20) und einer Saugleitung (21) angesetzt ist, wobei die Zulaufleitung (20) zur Probenentnahme bis in die Rohrachse der Abpumpleitung (6) ragt und die Saugleitung (21) in der Rohrachse der Abpumpleitung (6) als Kernleitungsstück (21a) in Milchflußrichtung weitergeführt ist (Fig. 1).

7. Vorrichtung nach den Ansprüchen 1 und 2, dadurch gekennzeichnet, daß an dem Belüftungsrohr (13) in Belüftungsrichtung hinter dem Belüftungsventil (14) — zwischen Belüftungsventil (14) und Meßkammerboden — eine Spülleitung (37) angeschlossen ist, die mit dem Belüftungsrohr (13) ein Spülrohr bildet.

8. Vorrichtung nach den Ansprüchen 1 bis 3, 5 und 7, dadurch gekennzeichnet, daß unterhalb des magnetischen, auf dem Belüftungsrohr (13) höhenverschiebbaren Schwimmer (10) ein elektrischer Schaltkontakt (24), vorzugsweise ein sich auf dem Meßkammerboden abhebender und von einer elastischen Schutzkappe (25) umgebender Reedkontakt, angeordnet ist, wobei der vom Magnetschwimmer (10) betätigbare (zu öffnende und zu schließende) Reedkontakt (24) für die Messung einer bestimmten Milchmenge, vorzugsweise eines zehntel Liters, ausgelegt ist und über elektrische Leitungen (26) mit dem Belüftungsventil (14) und der Anzeige (12) verbunden ist (Fig. 2).

9. Vorrichtung nach den Ansprüchen 1 bis 8, dadurch gekennzeichnet, daß um die Milcheinlauföffnung (4) am Boden (1a) der Luftabscheidekammer (1) ein umlaufender, in die Luftabscheidekammer (1) hineinragender, mit Milch-Durchflußöffnungen versehener, wie gelochter Verteilerrand (27) angeordnet ist (Fig. 3).

10. Vorrichtung nach den Ansprüchen 1 bis 9, dadurch gekennzeichnet, daß in dem kommunizierenden Bereich der Abpumpleitung (6) ein gewichtsabhängiges Rückschlagventil (30) angeordnet ist, welches mit seinem Ventilsitz mit dem Boden (3a) der Meßkammer (3) auf demselben Höhenniveau liegt (Fig. 3).

11. Vorrichtung nach den Ansprüchen 1 bis 3, 5 bis 7 und 9 und 10, dadurch gekennzeichnet, daß das Belüftungsrohr (13) als Einsatzkörper mit einer axialen, das Führungsrohr (16) des Trennventils (15) aufnehmenden Belüftungsbohrung (13b) und einem Führungsansatz (13c) für den höhenbeweglichen Schwimmer (10) sowie einer parallel zur Belüftungsbohrung (13b) verlaufenden Aufnahmebohrung (28) in Form einer Sacklochbohrung, in der ein Schaltkontakt (24) einstellbar angeordnet ist, ausgebildet ist, wobei der Schaltkontakt (24) über eine nach unten aus dem Einsatzkörper (13) herausgeführten elektrischen Leitung (26) mit der Anzeige (12) verbunden ist (Fig. 3).

12. Vorrichtung nach den Ansprüchen 1 bis 11, dadurch gekennzeichnet, daß die Zähl- und/oder Anzeigeeinrichtung (12) mit einem Taster (23) für die Handbetätigung des Belüftungsventiles (14) und Nullstellung der Anzeige (22) ausgestattet ist (Fig. 1).

13. Verfahren zum Messen der während eines Melkvorganges von einer Kuh abgegebenen und/oder zum Überwachen des Milchflusses unter Verwendung der Vorrichtung, nach einem oder mehreren der Ansprüche 1 bis 12, dadurch gekennzeichnet, daß während jedes Meß- und Überwachungsvorganges in der Luftabscheidekammer (1) und in der Meßkammer (3) gleiches Vakuum und somit Druckausgleich herrscht und die Milcheinlauföffnung (4) geöffnet ist und nach Beendigung jedes Meß- und Überwachungsvorganges durch Belüften der Meßkammer (3) die Milcheinlauföffnung (4) verschlossen und die Milch aus der Meßkammer (3) herausgedrückt wird.

14. Verfahren nach Anspruch 13, dadurch gekennzeichnet, daß während des Meßvorganges und/oder beim Herausdrücken der Milch von der Abpumpleitung (6) kontinuierlich Milchproben durch einen an die Abpumpleitung (6) angeschlossenen Probenentnehmer (19, 20) zwangsläufig entnommen werden.

15. Verfahren nach Anspruch 13, dadurch gekennzeichnet, daß die Frequenz der beim Milchmengenmessen entstehenden Schaltimpulse als Maß für den Milchfluß verwendet wird, wobei bei Verringerung der Frequenz der Schaltimpulse, entsprechend dem Milchfluß unter 0,25 kg/Min., die Pulsation der Melkanlage abgeschaltet oder die Pulsfrequenz verringert wird.

16. Verfahren nach den Ansprüchen 13 bis 15, dadurch gekennzeichnet, daß die Belüftungsphase unabhängig vom Milchfluß steuerbar ist und daß in der Belüftungsphase der Kammer (3) ein Luftteilstrom auf die Milchoberfläche zur Schaumzerstörung (Schaumbremse) gelenkt wird.

**Claims**

1. A milk metering and/or milk controlling device for milking plants for measuring the quantity of milk from a cow during a milking operation, or for controlling the milk flow during the milking operation, comprising a deaerating chamber (1), which is connected to a milk supply line (2) and may be acted on by an underpressure ; a measuring chamber (3) comprising a milk outlet (5) and connected via a closable milk inlet opening (4) to the deaerating chamber (1) and in which a measuring device is arranged having a magnetic float (10) guided on a pipe (13) and at least one switching contact (9) operated by the float (10) in dependence on the level of the milk ; and a counting and/or indicating device (12) which receives pulses from the switching contact or contacts, characterized in that the pipe (13) is constructed as an aeration pipe and in that the magnetic float (10) is guided on an aeration pipe (13) comprising an aeration valve (14) and ending at a distance below the milk inlet opening, which aeration pipe (13) movably carries, in the measuring chamber (3) at the air outlet end (13a), a separating valve (15) which releases the milk inlet opening (4) when there is underpressure in both chambers (1, 3) and closes said opening (4) during aeration.

2. A device according to claim 1, characterized in that the aeration pipe (13) is arranged on the central vertical axis of the measuring chamber (3) and comprises at its end projecting from the bottom the aeration valve (14) consisting of a solenoid valve.

3. A device according to claim 1, characterized in that the separating valve (15) is arranged vertically displaceably between the upper air outlet end (13a) of the aeration pipe (13) and the milk inlet opening (4) and is preferably formed of a disk valve or clack or ball-type valve, which engages with a guide tube (16) freely located in the aeration pipe (13), this guide tube (16) being directed through the milk inlet opening (4) into the deaerating chamber (1).

4. A device according to any one of claims 1 to 3, characterized in that a cylinder (17) is arranged around the aeration pipe (13) and around the float (10) equipped with a permanent magnet and a timing relay and/or a minimum-maximum switch, carries at least one and preferably several switching contacts (9) arranged spaced above each other and connected via an electric line (11) to the counting and/or measuring device (12), ends with its upper end at a distance below the milk inlet opening (4) and its lower end at a distance above the measuring chamber floor and forms with the measuring chamber casing an annular space for the milk to be measured, the separating valve (15) in the open position closing the upper end opening of the cylinder (17) to prevent milk flowing into the cylinder (17) and acting upon the float (10) from above (Fig. 1).

5. A device according to any one of claims 1 to 4, characterized in that an evacuation line (6) is connected to the milk outlet (5) adjacent the floor of the measuring chamber (3), is constructed at least up to the uppermost switching contact (9) in communication with the measuring chamber (3) and extends to a milk transporting line (7) and in that the evacuation line (6) and a vacuum supply line (18) for the deaerating chamber (1) have a common connection to the milk transporting line (7) (Fig. 1).

6. A device according to claim 5, characterized in that a removable sampling container (19) comprising a feed line (20) and a suction line (21) is attached to the evacuation line (6), the feed line (20) projecting to the axis of the evacuation line (6) for sampling and the suction line (21) extending along the axis of the evacuation line (6) as a central line portion (21a) in the direction of milk flow (Fig. 1).

7. A device according to claim 1 or claim 2, characterized in that a rinsing line (37) is connected to the aeration pipe (13) behind the aeration valve (14) in the direction of aeration — between the aeration valve (14) and the measuring chamber floor — and forms a rinsing pipe with the aeration pipe (13).

8. A device according to any one of claims 1 to 3, 5 and 7, characterized in that below the magnetic float (10) vertically displaceable on the aeration pipe (13) there is arranged an electric switching contact (24), preferably a reed contact which stands up from the measuring chamber floor and is surrounded by an elastic protective cover (25), the reed contact (24), which is activatable (openable and closable) by the magnetic float (10), being designed to measure a specific quantity of milk, preferably a tenth of litre, and being connected via electric lines (26) with the aeration valve (14) and the indicator (12) (Fig. 2).

9. A device according to any one of claims 1 to 8, characterized in that a circular distributor rim (27) provided with milk through-flow openings, as if perforated, is arranged around the milk inlet opening on the floor (1a) of the deaerating chamber (1) and projecting into the deaerating chamber (1) (Fig. 3).

10. A device according to any one of claims 1 to 9, characterized in that in the communicating area of the evacuation line (6) there is arranged a weight-dependent non-return valve (30), which lies with its valve seat at the same level as the floor (3a) of the measuring chamber (3) (Fig. 3).

11. A device according to any one of claims 1 to 3, 5 to 7 and 9 and 10, characterized in that the aeration pipe (13) is constructed as an insert having an axial aeration bore (13b) receiving the guide tube (16) of the separating valve (15), a guide neck (13c) for the vertically displaceable float (10) and a receiving bore (28) in the form of a blind bore running parallel to the aeration bore (13b), in which receiving bore (28) a switching contact (24) is adjustably arranged, the switching contact (24) being connected to the indicator (12) via an electric line (26) passing out of the insert (13) at the bottom thereof (Fig. 3).

12. A device according to any one of claims 1 to 11, characterized in that the counting and/or indicating device (12) is equipped with a pushbutton switch (23) for the manual operation of the aeration valve (14) and for setting the indicator (22) to zero (Fig. 1).

13. A method for measuring the quantity of milk from a cow during a milking operation and/or for controlling the milk flow by using the device according to one or more of claims 1 to 12, characterized in that during each measuring and controlling operation an equal vacuum and thus a pressure balance is present in the deaerating chamber (1) and in the measuring chamber (3) and the milk inlet opening (4) is open and after completion of each measuring and controlling operation the milk inlet opening (4) is closed and the milk pushed out of the measuring chamber (3) by aeration of the measuring chamber (3).

14. A method according to claim 13, characterized in that during the measuring operation and/or the expulsion of the milk from the evacuation line (6) milk samples are continuously and forcibly taken by a sampler (19, 20) connected to the evacuation line (6).

15. A method according to claim 13, characterized in that the frequency of the switching pulses arising during milk metering is used as a gauge for the milk flow, the pulsation of the milking plant being switched off or the pulse frequency reduced on a decrease of the frequency of the switching pulses corresponding to a milk flow of less than 0.25 kg/min.

16. A method according to any one of claims 13 to 15, characterized in that the aeration phase is controllable independently of the milk flow and that in the aeration phase of the chamber (3) a branch air stream is directed onto the milk surface to destroy froth (froth suppression).

**Revendications**

1. Dispositif de mesurage de la quantité de lait et/ou dispositif de contrôle de l'écoulement du lait pour installations trayeuses, destiné à mesurer la quantité de lait fournie par une vache pendant une traite, respectivement : à contrôler l'écoulement du flux de lait pendant la traite, comprenant une chambre de séparation d'air (1), pouvant être mise sous vide et reliée à une conduite d'amenée du lait (2), et une chambre de mesurage (3), reliée à la chambre de séparation d'air (1) par l'intermédiaire d'une ouverture d'entrée du lait (4) fermable, présentant un orifice d'évacuation du lait (5), chambre de mesurage (3) dans laquelle sont disposés un dispositif de mesurage avec flotteur magnétique (10) conduit sur un tube (13) et, au moins, un contact de commutation (9) actionnable par le flotteur (10) en fonction de la hauteur du niveau du lait, ainsi qu'un dispositif compteur ou indicateur (12) recevant des impulsions de la part du/des contact/s de commutation, caractérisé par le fait que la tube (13) est conçu sous forme de tube d'aération et que le flotteur magnétique (10) est conduit sur un tube d'aération (13) se terminant, à intervalle, avant l'ouverture d'entrée du lait (4) et présentant une soupape d'aération (14), tube d'aération (13) portant, dans la chambre de mesurage (3), à l'extrémité d'évacuation de l'air (13a), une soupape séparatrice (15), mobile, libérant, en dépression dans les deux chambres (1, 3), l'ouverture d'entrée du lait (4) et la fermant lors de l'aération.

2. Dispositif selon spécification 1, caractérisé par le fait que le tube d'aération (13) est disposé sur l'axe vertical central de la chambre de mesurage (3) et présente, à son extrémité inférieure faisant saillie, une soupape d'aération (14), formée par une soupape magnétique.

3. Dispositif selon spécification 1, caractérisé par le fait que la soupape de séparation (15), entre l'extrémité supérieure d'évacuation de l'air (13a) du tube d'aération (13) et l'ouverture d'entrée du lait (4), est disposée déplaçable en hauteur et formée de préférence par une soupape à disque, ou un papillon ou une soupape cylindrique, intervenant avec un tube de guidage (16), conduit librement dans le tube d'aération (13), ce tube de guidage (16) étant conduit, à travers l'ouverture d'entrée du lait (4), jusque dans la chambre de séparation d'air (1).

4. Dispositif selon les spécifications de 1 à 3, caractérisé par le fait qu'un cylindre (17) est disposé de sorte à entourer le tube d'aération (13) et le flotteur (10), équipé d'un aimant permanent ainsi que d'un relais temporisé et/ou un commutateur minimum-maximum, lequel cylindre est équipé d'un — de préférence de plusieurs — contacts de commutation (9) disposés à distance les uns au-dessus des autres et reliés à un dispositif compteur et/ou mesureur (12) par l'intermédiaire d'une conduite électrique (11). Ce cylindre (17) se termine par sa partie frontale supérieure à distance au-dessous de l'ouverture d'entrée du lait (4) et par sa partie inférieure frontale à distance au-dessus du fond de la chambre de mesurage et forme avec le manteau de la chambre de mesurage un espace annulaire pour le lait à mesurer, la soupape de séparation (15) fermant, en position ouverte (fig. 1), l'ouverture frontale supérieure du cylindre (17), tout en empêchant l'écoulement du lait dans le cylindre (17) et, partant de là, une perturbation du flotteur (10) par en haut.

5. Dispositif selon les spécifications de 1 à 4, caractérisé par le fait qu'une conduite de pompage (6) est raccordé à l'évacuation du lait (5), côté fond, de la chambre de mesurage (3), laquelle conduite de pompage (6) remonte au moins jusqu'au contact de commutation (9) supérieur, communique avec la chambre de mesurage (3) et que cette conduite de pompage (6) et une conduite d'alimentation en vacuum (18) de la chambre de séparation d'air (1) possède un raccord commun, les reliant à la conduite de transport du lait (7) (Fig. 1).

6. Dispositif selon spécification 5, caractérisé par le fait qu'un récipient de prélèvement d'échantillons amovible (19) est relié à la conduite de pompage (6) par une conduite d'admission (20) et une conduite d'aspiration (21), la conduite d'admission (20) faisant saillie jusque dans l'axe du tube de la conduite de pompage (6) pour prélèvement d'échantillons et la conduite d'aspiration (21) étant prolongée dans l'axe du tube de la conduite de pompage (6), en tant que pièce de conduite centrée (21a), ceci dans le sens de l'écoulement du flux de lait (Fig. 1).

7. Dispositif selon les spécifications 1 et 2, caractérisé par le fait qu'une conduite de rinçage (37), formant un tube de rinçage avec le tube d'aération (13), est raccordée au tube d'aération (13), dans le sens de la ventilation, derrière la soupape d'aération (14) — entre la soupage d'aération (14) et le fond de la chambre de mesurage.

8. Dispositif selon les spécifications de 1 à 3, 5 et 7, caractérisé par le fait qu'un contact de commutation électrique (24) — de préférence un contact reed faisant saillie au-dessus du fond de la chambre de mesurage et entouré d'un capot protecteur élastique (25) — est disposé au-dessous du flotteur magnétique (10) déplaçable en hauteur sur le tube d'aération (13), ce contact reed (24) actionnable (ouvrable, fermable) par le flotteur magnétique (10) étant dimensionné pour le mesurage d'une quantité de lait déterminée, de préférence d'un dixième de litre, et relié à la soupape d'aération (14) et l'indicateur (12) par l'intermédiaire de conduites électriques (26) (Fig. 2).

9. Dispositif selon les spécifications de 1 à 8, caractérisé par le fait qu'une bordure de répartition (27) est disposée tout autour de l'ouverture d'entrée du lait (4), sur le fond (1a) de la chambre de séparation d'air (1), faisant saillie dans celle-ci, et est pourvue d'orifices de passage du lait, comme perforations (Fig. 3).

10. Dispositif selon les spécifications de 1 à 9, caractérisé par le fait que, dans le secteur de communication de la conduite de pompage (6), une soupape de retenue (30) dépendante du poids est disposée, laquelle repose avec son siège de soupape au même niveau de hauteur que le fond (3a) de la chambre de mesurage (3) (Fig. 3).

11. Dispositif selon les spécifications de 1 à 3, 5 à 7 et 9 et 10, caractérisé par le fait que le tube d'aération (13) est conçu sous forme d'insert avec forure d'aération axiale (13b), accueillant le tube de guidage (16) de la soupage séparatrice (15) et un épaulement de guidage (13c) pour le flotteur (10) mobile dans le sens de la hauteur, ainsi qu'une forure de réception (28), parallèle à la forure d'aération (13b), exécutée en trou borgne et dans laquelle un contact de commutation (24) est disposé, le contact commutateur (24) étant relié à l'indicateur (12) par l'intermédiaire d'une conduite électrique (26), sortant, par en bas, de l'insert (13) (Fig. 3).

12. Dispositif selon les spécifications de 1 à 11, caractérisé par le fait que la dispositif compteur et/ou indicateur (12) est pourvu d'un palpeur (23) pour l'actionnement manuel de la soupape d'aération (14) et la mise à zéro de l'indication (22) (Fig. 1).

13. Procédé pour mesurer la quantité de lait fournie par une vache pendant une traite et/ou contrôler l'écoulement du lait en utilisant le dispositif selon une ou plusieurs spécifications de 1 à 12, caractérisé par le fait que, pendant chaque opération de mesurage et de contrôle, le même vide, et partant de là compensation de pression, règne dans la chambre de séparation d'air (1) et dans la chambre de mesurage (3) et que l'orifice d'entrée du lait (4) est ouverte et, qu'après terminaison de chaque opération de mesurage et de contrôle, l'orifice d'entrée du lait (4) est fermée par aération de la chambre de mesurage (3) et le lait pressé hors de la chambre de mesurage (3).

14. Procédé selon spécification 13, caractérisé par le fait que, pendant l'opération de mesurage et/ou pendant l'éjection du lait, des échantillons de lait sont continuellement prélevés de la conduite de pompage (6) par un préleveur d'échantillons (19, 20) raccordé à la conduite de pompage (6), le prélèvement forcé se faisant automatiquement.

15. Procédé selon spécification 13, caractérisé par le fait que la fréquence des impulsions de commutation, se produisant lors du mesurage de la quantité de lait, servent d'unités de mesure du flux de lait, la pulsation de l'installation trayeuse étant mise hors circuit ou la fréquence de pulsations réduite, lors de la diminution de la fréquence des impulsions de commutation, correspondant à un flux de lait inférieur à 0,25 kg/min.

16. Procédé selon les spécifications de 13 à 15, caractérisé par le fait que la phase d'aération peut être commandée indépendemment du flux de lait et que, pendant la phase d'aération de la chambre (3), un courant partiel d'air est dérivé sur la surface du lait aux fins de détruire la mousse (freinage de mousse).

Fig. 1

Fig. 2

Fig. 3